# EUROPEAN PATENT APPLICATION

(11) **EP 2 965 798 A1**
(43) Date of publication of application: **13.01.2016**
(21) Application number: 15172835.9
(22) Date of filing: 19.06.2015
(51) Int. Cl.: B01D 35/027, B01D 29/01, B01D 29/11, B29C 65/00

(54) **OIL STRAINER**

(30) Priority: 07.07.2014 JP 2014139545
(71) Applicant: Roki Co., Ltd., Hamamatsu-shi, Shizuoka 431-3314 (JP)
(72) Inventor: Goto, Masanori, Hamamatsu-shi, Shizuoka 431-3314 (JP)
(74) Representative: Viering, Jentschura & Partner mbB Patent- und Rechtsanwälte

(57) **Abstract**

An oil strainer includes a cover member provided with an oil flow-in port and a first weld portion, a body member provided with an oil flow-out port and a second weld portion opposing to the first weld portion, and a filter member disposed so as to be held between the first weld portion and the second weld portion. The first weld portion and the second weld portion are formed with an abutting weld portion at which the first and second weld portions abuts to each other and formed with a filtration portion abutting the filter member.

## Description

### BACKGROUND OF THE INVENTION

### Field of The Invention

The present invention relates to an oil strainer for filtrating an oil sucked from an oil reservoir provided for a casing of such as an automatic transmission of an automobile or like.

### Related Art

In a conventional technology, there are known various types of oil strainers used for automatic transmissions of automobiles or like, and for example, there is known an oil strainer in which a bottomed cup-shaped cover member having a flow-in port and a body member having a flow-out port are disposed so as to oppose to each other, a filter member made of sheet-shaped metal net member or like is held between the flow-in port and the flow-out port, and the peripheral edge portions of the cover member and the body member are joined together by means of vibration welding to thereby hold and simultaneously fix the peripheral edge portion of the filter member.

Generally, an oil known as working oil or lubrication oil for an automatic transmission provided for such as an automobile is stored in an oil reservoir formed at a bottom portion of the automatic transmission, and the oil is sucked up by an oil pump and is then delivered to portions of the automatic transmission necessary for lubrication of the oil. In such arrangement, an oil strainer is arranged to filtrate the oil.

Patent Document 1 (Japanese Patent Laid-open Publication No. HEI 8-266820) discloses an oil strainer, in which a lower case having an oil flow-in port and an upper case having an oil flow-out port are disposed so as to oppose to each other, a sheet-shaped filter member is disposed between both the lower and upper cases, and the peripheral edge portions of these cases are joined together, thereby holding and fixing the peripheral edge portion of the filter member between these cases.

In the oil strainer having the above structure, a wall portion is formed entirely along at least one of the peripheral edge portions of both these cases, the peripheral edge portion of the filter member is entirely bent, to which an engaging portion is formed, and the engaging portion is engaged with the above-mentioned wall portion to thereby join the peripheral edge portions of both the cases together.

As described above, in the oil strainer disclosed in the Patent Document 1, the engaging portion formed to the peripheral edge portion of the filter member disposed between the upper and lower cases is engaged with the peripheral edge portion of the wall portion formed to the peripheral edge portion of either one of the upper and lower cases, and under such condition, by joining the peripheral edge portions of both the cases, the peripheral edge portion of the filter member is held between these cases. Accordingly, even if a large pressure acts on the filter member at an oil feeding time, the engaging portion of the peripheral edge portion of the filter member engages with the wall portion of either one of the upper and lower cases, thereby holding the peripheral edge portion of the filter member to a portion between both the upper and lower cases without coming off from the portion therebetween.

However, according to the oil strainer disclosed in the above Patent Document 1, since the vibration welding is performed under a condition in which the filter member is held between the peripheral edge portions of the upper and lower cases, the welded strength is reduced because the filter member is interposed between both the cases.

Moreover, in order to enhance welding strength, as disclosed in Patent Document 2 (Japanese Utility Model Laid-open Publication No. HEI 6-76758), a conventional technology provides a structure in which a reinforcing frame member is fitted together with a filter member, and in which a frame member made of synthetic resin is formed to the peripheral edge portion of the filter member and the upper case, the lower case and the frame member of the filter member are simultaneously subjected to vibration welding to thereby weld these members. According to such structure, however, the reinforcing frame member is needed, in addition to the filter member, to be located to the peripheral edge portion of the filter member, which makes it difficult to decrease a manufacturing cost of an oil strainer.

### SUMMARY OF THE INVENTION

The present invention was conceived in consideration of the circumstances mentioned above and an object thereof is to provide an oil strainer capable of surely holding and fixing a filter member by a cover member and a body member with a simple structure with high welding strength to the cover member and the body member.

The above and other object can be achieved according to the present invention by providing an oil strainer including a cover member provided with an oil flow-in port and a first weld portion, a body member provided with an oil flow-out port and a second weld portion opposing to the first weld portion, and a filter member disposed so as to be held between the first weld portion and the second weld portion, wherein the first weld portion and the second weld portion are formed with an abutting weld portion at which the first and second weld portions abuts to each other and formed with a filtration portion abutting the filter member.

In the oil strainer of the present invention having the structures mentioned above, the infiltration portion may be formed in a manner that a part of the first weld portion and a part of the second weld portion are fused at the abutting weld portion, and the fused parts infiltrate and then solidify in the filter member.

It may be desired that the infiltration portion is formed, as a stepped portion, to a welded portion of either one of the first and second weld portions.

It may be also desired that either one of the first weld portion and the second weld portion is formed with a protruded portion projecting toward another one of the first weld portion and the second weld portion, and wall portions are formed on the inner and outer sides of the another one of the first weld portion and the second weld portion in parallel thereto.

It may be further desired that the filter member is provided with a holding portion bent along the wall portions.

According to the oil strainer of the present invention, since the first weld portion and the second weld portion are formed with an abutting weld portion at which the first and second weld portions abuts to each other and formed with a filtration portion abutting the filter member, the welded strength between the first and second weld portions at their abutting weld portion can be ensured, and since the resin fused at the abutting weld portion infiltrates the filter member at the infiltration portion, the filter member can be surely held and firmly fixed.

In addition, in the oil strainer of the present invention, since the infiltration portion is formed in a manner that a part of the first weld portion and a part of the second weld portion are fused at the abutting weld portion, and the fused parts infiltrate and then solidify in the filter member, the filter member can be surely held and fixed.

Furthermore, since according to the oil strainer of the present invention, the infiltration portion is formed, as a stepped portion, to a welded portion of either one of the first and second weld portions, the filter member can be easily positioned and surely held between the cover member and the body member only by fitting the filter member to the stepped portion before the vibration welding process.

Still furthermore, according to the oil strainer of the present invention, either one of the first weld portion and the second weld portion is formed with a protruded portion projecting toward another one of the first weld portion and the second weld portion, and wall portions are formed on the inner and outer sides of the another one of the first weld portion and the second weld portion in parallel thereto. Accordingly, the wall portions can prevent the fused resin produced at the vibration welding process from exposing outward.

Still furthermore, according to the oil strainer of the present invention, since the filter member is provided with the holding portion bent along the wall portions, the holding portion can engage with at least one of the case member and the body member to thereby surely hold the filter member.

The nature and further characteristic features of the present invention will be made clearer from the following description made with reference to the accompanying drawings.

### BRIEF DESCRIPTION OF THE DRAWINGS

Fig. 1 is a perspective view of an oil strainer according to one embodiment of the present invention;
Fig. 2 is a developed perspective view of the oil strainer of the embodiment shown in Fig. 1;
Fig. 3 is a sectional view taken along the line III-III in Fig. 1;
Fig. 4 is a sectional view illustrating a condition of a body member and a filter member before performing vibration welding to the oil strainer of the embodiment of the present invention;
Fig. 5 is a sectional view illustrating a condition of the body member, the filter member and a cover member before performing the vibration welding to the oil strainer of the present embodiment;
Fig. 6 is a sectional view illustrating a state in which the vibration welding is being performed to the oil strainer of the present embodiment; and
Fig. 7 is a sectional view illustrating a state after performing the vibration welding to the oil strainer of the present embodiment.

### DESCRIPTION OF THE PREFERRED EMBODIMENT

Hereunder, a preferred one embodiment of the present invention will be described with reference to the accompanying drawings.

It is to be noted that the following embodiment is not limited to the invention defined by appended claims, and all the combination of the subject features of the present embodiment described herein is not essential for the solution of the present invention. it is also noted that terms such as "upper", "lower", "right", "left" and the like term for indicating direction are used herein with reference to the illustration on the drawings.

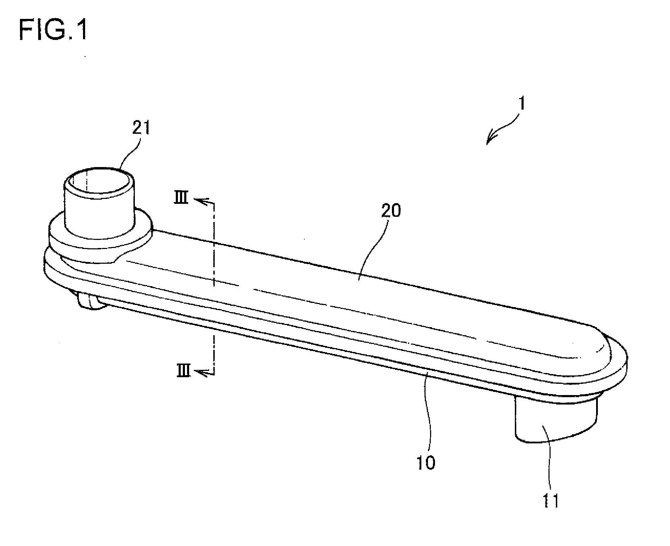

As shown in Fig. 1, an oil strainer 1 of the present embodiment includes a cover member 10 formed with a flow-in port 11 and a body member 20 formed with a flow-out port 21, and the cover member 10 and the body member 20 are welded in an opposed fashion.

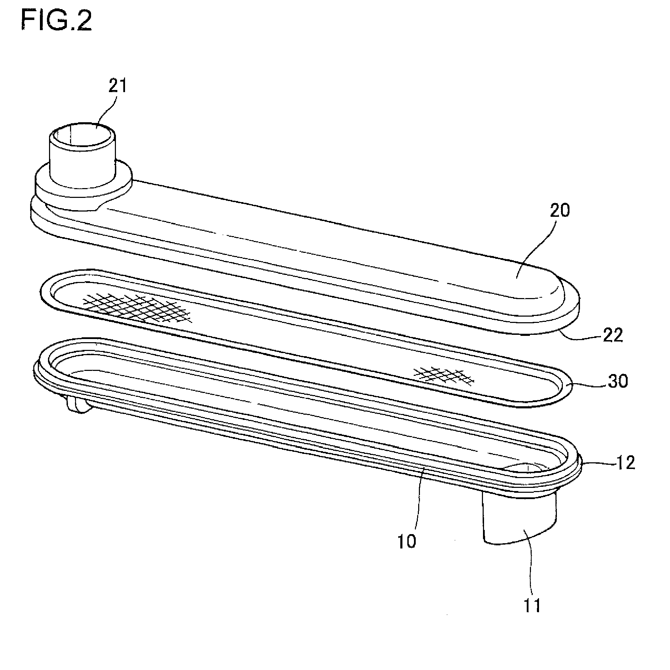

The cover member 10 of the oil strainer 1 shown in Fig. 2 has a peripheral portion to which a first weld portion 12 (hereinafter, which may be read as "a portion to be welded 12" before welding and as "a welded portion 12" after welding) is formed, and the body member 20 has a peripheral portion to which a second weld portion 22 (hereinafter, which may be read as "a portion to be welded 22" before welding and as "a welded portion 22" after welding) is formed so as to oppose to the first weld portion 12. Furthermore, a sheet-shaped filter member 30 is disposed between the cover member 10 and the body member 20 so as to be held and fixed between the first and second weld portions 12 and 22.

The cover member 10 and the body member 20 are both formed of synthetic resin material, for example, thermoplastic synthetic resin such as polypropylene series resin or polyamide series resin. Further, it is preferred for the filter member 30 to be formed of a metallic net member having net mesh openings each has a size capable of removing foreign material mixed into the oil.

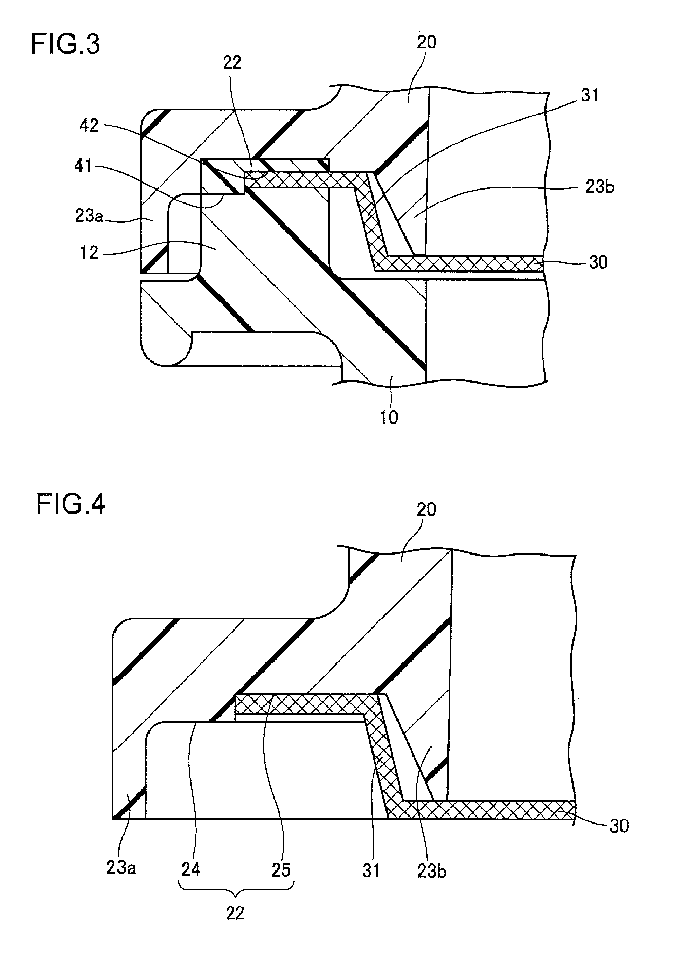

Next, as shown in Fig. 3, the first weld portion 12 of the cover member 10 is formed as a protruded portion projecting toward the second weld portion 22 of the body member 20 to be welded thereto at the time of welding the cover member 10 and the body member 20 together. Further, the body member 20 is formed with wall portions 23a and 23b opposing to inner and outer peripheral sides of the first weld portion 12.

As mentioned above, since the wall portions 23a and 23b are formed so as to oppose to the inner and outer peripheral sides of the first weld portion 12, even if burrs of the synthetic resin forming the cover member 10 and the body member 20 are generated by the vibration welding, such burrs can be held between the wall portions and the first weld (welded) portions 12, and hence, the burrs can be prevented from exposing outward, thereby preventing the burrs from mixing into the oil passage.

Furthermore, the filter member 30 is formed with a holding portion 31 which is bent along the first weld portion 12 and the inner side wall portion 23b at the inside of an outer peripheral portion of the filter member 30 which is held by the first and second weld (welded) portions 12 and 22. After welding the cover member 10 and the body member 20, the holding portion 31 engages with the inner side wall portion 23b to thereby prevent the filter member 30 from coming off therefrom.

Further, the first and second weld portions 12 and 22 are formed with an abutting welded portion 41 at which the first and second weld portions 12 and 22 are directly welded and with an infiltration portion 42 abutting thereto with the filter member 30 being interposed therebetween.

As shown in Fig. 4, the second weld portion 22 is formed with a flat surface portion 24 and a stepped portion 25 formed to the flat surface portion 21 so that the filter member 30 can be assembled to the stepped portion 25.

As mentioned above, since the first and second weld portions 12 and 22 are formed with abutting welded portion 41 and the infiltration portion 42, the welding strength can be ensured by the abutting welded portion 41, and the holding strength for the filter member 30 can be ensured by the infiltration portion 42.

Furthermore, in the present embodiment, the infiltration portion 42 is formed and solidified by partly fusing the first and second weld portions 12 and 22 made of resin by the vibration welding and infiltrating the fused resin portions into the net mesh openings. Therefore, the solidified resin infiltrated in the net mesh openings of the infiltration portion 42 acts as wedge means to thereby firmly hold and fix the filter member.

Next, a welding method of the oil strainer 1 according to the present embodiment will be explained with reference to Figs. 4 to 7.

First, as shown in Fig. 4, the filter member 30 is assembled to the stepped portion 25 formed to the flat surface portion 24 of the second weld portion 22, and in this assembling, the filter member 30 is positioned so as not to protrude over the flat surface portion 24. According to this structure, the flat surface portion 24 of the second weld portion 22 surely abuts against the first weld portion 12 to thereby firmly form the abutting welded portion 41. Furthermore, since the filter member 42 is provided so as not to protrude outward from the flat surface portion 24, the filter member is not in friction with the first weld portion 12 when the vibration welding is performed, and accordingly, the filter member 30 is free from damage or breakage in the vibration welding process, thus being advantageous.

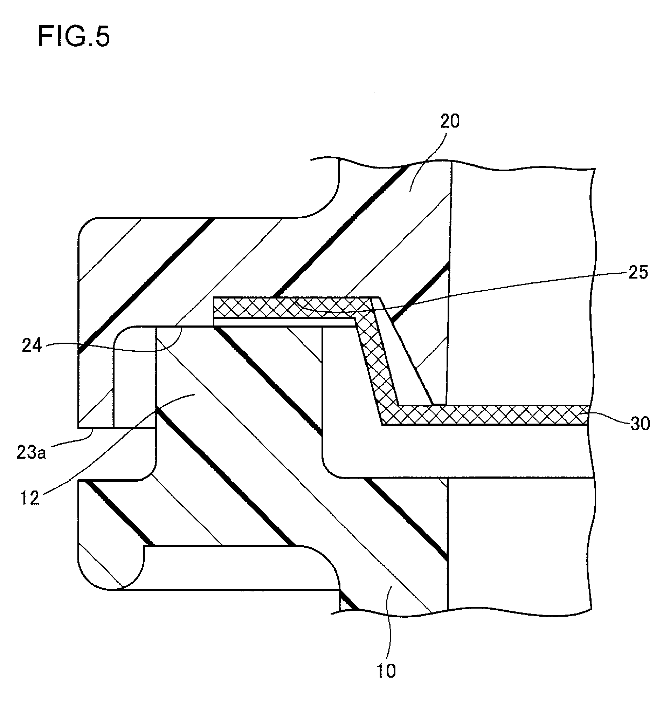

Next, as shown in Fig. 5, the cover member 10 is assembled to the body member 20 in a manner such that the first weld portion 12 abuts against the flat surface portion 24 of the second weld portion 22. In this assembling, in order to prevent the filter member 30 from coming off from the stepped portion 25, the filter member 30 and the stepped portion 25 may be temporarily fixed at two points, for example, by means of simple ultrasonic welding or press fitting by a hot plate. Furthermore, other than such temporarily fixing, it may be possible to form a projection inside the stepped portion 25 so as to be engaged with the net portion of the filter member 30.

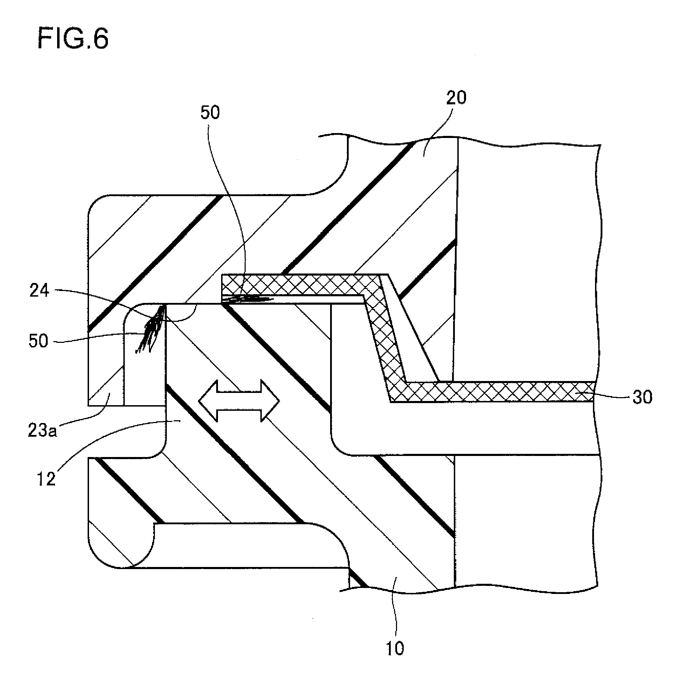

As shown in Fig. 6, the vibration welding is performed, while pressing the cover member 10 against the body member 20, by vibrating the cover member 10 in a direction crossing the projecting direction of the first weld portion 12. The welding conditions for such vibration welding may be appropriately adjusted in accordance with a required vibrating strength and shapes of the cover member 10 and body member 20.

According to such vibration welding, the flat surface portion 24 and the first weld portion 12 are partially fused to thereby produce fused resin portions 50. The fused resin portion 50 leaking outward of the flat surface portion 24 is held between the first weld portion 12 and the outer wall portion 23a, thus being prevented from exposing outward of the oil strainer 1.

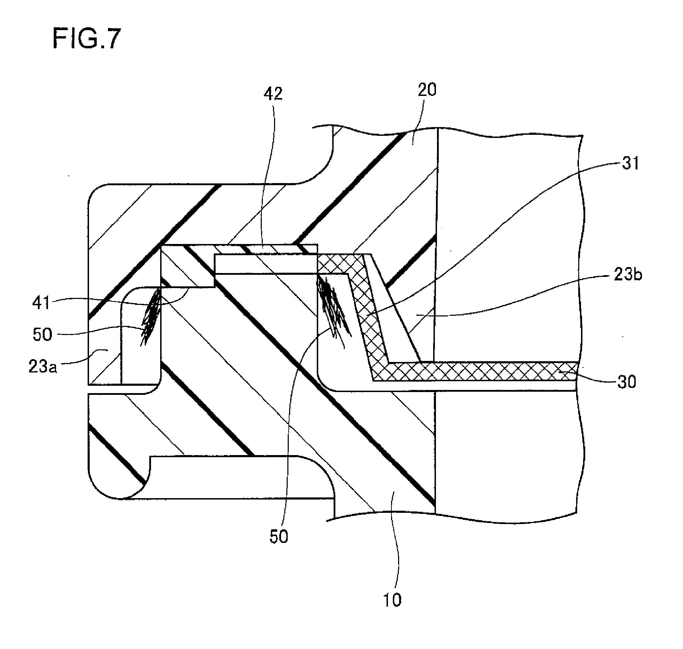

Furthermore, the fused resin portion leaking to the inside of the flat surface portion 24 flows inside the stepped portion 25, and at this moment, the fused resin portion 50 invades into the net mesh of the filter member 30 and fixes it. Moreover, as shown in Fig. 7, the fused resin portion which is not invaded into the net mesh of the filter member 30 is held between the first weld portion 12 and the inside wall portion 23b to thereby prevent the fused resin portion 50 from exposing inward of the oil strainer 1.

As described above, since the oil strainer of the present embodiment is provided with the abutting welded portion 41 at which the first and second weld portions 12 and 22 are directly welded and the infiltration portion 42 abutting against the filter member 30, the abutting welded portion 41 can ensure the welded strength of the first and second weld portions 12 and 22, and the filter member 30 can be held by invading the resin portion fused by the welding of the abutting welded portion 51 into the filter member 30 at the infiltration portion 42, thus surely holding and fixing the filter member 30 between the cover member 10 and the body member 20.

In addition, according to the oil strainer 1 of the present embodiment, since the infiltration portion 42 is formed to the second weld portion 22 as the stepped portion 25, the filter member 30 can be easily positioned by fitting the filter member 30 to the stepped portion 25 before performing the vibration welding, thus surely and firmly holding the filter member 30 between the cover member 10 and the body member 20.

Furthermore, according to the oil strainer 1 of the present embodiment, the first weld portion 12 is formed as a protruded portion projecting toward the second weld portion 22, and the wall portions 23a and 23b are formed on the inner and outer peripheral sides of the first and second weld portions 12 and 22, so that the fused resin portion 50 of the wall portions 23a and 23b produced at the vibration welding can be prevented from exposing outward.

Still furthermore, according to the oil strainer 1 of the present embodiment, since the filter member 30 is provided with the holding portion 31 bent along the first weld portion 12 and the wall portion 23b, the holding portion 31 engages with the body member 20, and hence, the filter member 30 can be surely held.

Further, it is to be noted that the present invention is not limited to the described embodiment and many other changes and modifications may be made.

For example, in the described embodiment, the filter member 30 is formed of metallic net mesh material as one example, the filter member 30 is not limited to such metallic net material and unwoven fabric or filtering paper may be utilized in place of the metallic net material.

Furthermore, in the above description, although an embodiment in which the cover member 10 and the body member 20 are welded by the vibration welding is described, such welding is not limited to the vibration welding and other welding means such as ultrasonic welding may be utilized.

Moreover, it should be understood that many other changes and modifications other than the above alternations may be also made within the technical scope of the present invention.

## Claims

1. An oil strainer comprising:
a cover member provided with an oil flow-in port and a first weld portion;
a body member provided with an oil flow-out port and a second weld portion opposing to the first weld portion; and
a filter member disposed so as to be held between the first weld portion and the second weld portion,
wherein the first weld portion and the second weld portion are formed with an abutting weld portion at which the first and second weld portions directly abuts to each other and formed with a filtration portion abutting the filter member.

2. The oil strainer according to claim 1, wherein the infiltration portion is formed in a manner that a part of the first weld portion and a part of the second weld portion are fused at the abutting weld portion, and the fused parts infiltrate and then solidify in the filter member.

3. The oil strainer according to claim 1 or 2, wherein the infiltration portion is formed, as a stepped portion, to a welded portion of either one of the first weld portion and the second weld portion.

4. The oil strainer according to any one of claims 1 to 3, wherein either one of the first weld portion and the second weld portion is formed with a protruded portion projecting toward another one of the first weld portion and the second weld portion, and wall portions are formed on the inner and outer sides of the another one of the first weld portion and the second weld portion in parallel thereto.

5. The oil strainer according to claim 4, wherein the filter member is provided with a holding portion bent along the wall portions.
